# EUROPEAN PATENT APPLICATION

(11) **EP 2 109 300 A1**
(43) Date of publication of application: **14.10.2009**
(21) Application number: 08844766.9
(22) Date of filing: 24.10.2008
(51) Int. Cl.: H04M 3/42

(54) **A DISPLAY METHOD AND DEVICE FOR SPONSOR INFORMATION**

(30) Priority: 26.10.2007 CN 200710167955
(71) Applicant: Huawei Technologies Co., Ltd., Longgang District, Shenzhen Guangdong Province 518129 (CN)
(72) Inventor: YANG, Jian, Shenzhen Guangdong Province 518129 (CN); FAN, Shunan, Shenzhen Guangdong Province 518129 (CN)
(74) Representative: Pfenning, Meinig & Partner GbR
(86) International application number: PCT/CN2008/072829
(87) International publication number: WO 2009/056068

(57) **Abstract**

A method for displaying originator information includes: receiving a message or a call originated by an originator and forwarded by a server; acquiring originator information according to the message or the call; and displaying the acquired originator information. A kind of equipment displaying originator information is also provided. With the present invention, the recipient can acquire the originator number and service originator information by acquiring the content in the request or the call originated by the originator. In this case, the brand logo can be displayed to achieve simple and economic service promotion, or the personalized label, nameplate, advertisement image, or expression information can be displayed to implement personalized services.

## Description

This application claims priority to Chinese patent application No. 200710167955.6, filed with the Chinese Patent Office on October 26, 2007 and entitled "Method and Equipment for Displaying Originator Information", which is incorporated herein by reference in its entirety.

### Field of the Invention

The present invention relates to communication technologies, and in particular, to a method and equipment for displaying originator information.

### Background of the Invention

At present, number segments are allocated in a centralized manner. The planning is as follows: Numbers starting with 10 are telecom service numbers, for example, 103 for international semi-automatic registered call, 108 for international collect call, 1000 for China Telecom service center, and 1001 for China Unicom service center. Numbers starting with 11 are special service numbers, for example, 110 for police emergency call, 111 for internal test of China Telecom, 112 for fault report, 113 and 115 for national manual toll registered call, 114 for number inquiry, 116 for national manual toll number inquiry, 117 for time report, and 119 for fire emergency call. Numbers starting with 12 are special numbers for civil use, for example, 120 for hospital, 121 for weather forecast, 122 for traffic accident report, and 126, 127, 128, and 129 for paging (when beepers are used). Numbers starting with 13 are allocated to terminal users. First, number segment 139 is allocated to China Mobile. Later, number segments 130 to 133 are allocated to China Unicom, and number segments 134 to 139 are allocated to China Mobile. There are still some special number segments, for example, 16 for voice guide service, 17 for toll call service, 18 for partial service centers, 19 for paging access, 20 and 30 for phone card service, and 400 and 800 for collect call.

A service provider (SP) provides value-added telecom services for users through the value-added interfaces provided by operators. A content provider (CP), the upstream vendor of SPs, provides products or contents to SPs and then to operators through the SPs. In terms of enterprise service development, SPs fall into three types: portal SPs (e.g. Sina, Sohu, and NetEase), professional SPs (such as mobile payment SP and Dotman), and specialized SPs (for example, Tencent). In terms of service contents, SPs fall into the following types: short message service (SMS), multimedia message service (MMS), ring back tone (RBT), Wireless Application Protocol (WAP), mobile search, mobile payment, and mobile securities SPs. Portal SPs mainly provide the SMS, MMS, and RBT services. Professional SPs mainly provide the mobile payment and mobile securities services. Among these services, some may concern different types of SPs. For example, the Sina portal also involves the mobile search service.

At present, when a message or a call originated by the SP or another user arrives, a user may acquire the originator information by using the caller ID display (CID) function of a user equipment (UE). Specifically, when a message or a call arrives, if the phone number of the originator is not stored or named on the UE, the UE displays the phone number of the originator. If the phone number is already stored and named on the UE, and the user knows the phone number and the originator in advance, the UE displays the name specified by the user. Certainly, if the user acquires a photo of the originator by other means in advance, the user can store the photo locally and associate it with the phone number. In this case, the UE displays the photo when a message or a call from the originator arrives. The service originator can write information in the message body, for example, adding the signature of "China Mobile".

During the implementation of the present invention, the inventor discovers at least the following problems in the conventional art:

If the phone number of a call or a message is not stored on the UE and the user does not know the identity of the originator, the user may answer the undesired call or view the undesired message, and may even subscribe to a specific service if the user answers the call or replies to the message, which affects the user experience. Besides, for some messages, though the originator information is added, the user still has to open the message before viewing the originator information, and therefore the user still views the undesired message.

### Summary of the Invention

Various embodiments of the present invention provide a method and equipment for displaying originator information on a UE so that the UE displays originator information when receiving a message or a call from an originator.

An embodiment of the present invention provides a method for displaying originator information. The method includes: receiving a message or a call originated by an originator and forwarded by a server; acquiring information about the originator of the message or the call; and displaying the acquired originator information.

Further, an embodiment of the present invention provides a method for sending originator information. The method includes: adding originator information to a message or a call originated to a recipient; and sending the message or originating the call to the recipient through a server.

Further, an embodiment of the present invention provides a method for sending originator information. The method includes: receiving a call or a message originated by an originator to a recipient; adding originator information to the call or the message; and sending the call or the message that carries the originator information to the recipient.

Further, an embodiment of the present invention provides a recipient equipment. The recipient equipment includes: an information list acquiring unit, configured to acquire an information list from a server, where the information list includes a phone number and corresponding user information; an information list storing unit, configured to store the information list acquired by the information list acquiring unit; and an information list matching unit, configured to match an originator number of a received message or a call according to the information list stored by the information list storing unit and acquire originator information.

An embodiment of the present invention provides a server. The server includes: an information list providing unit, configured to provide an information list to a recipient; and an information list maintaining unit, configured to maintain the information list including a phone number and corresponding user information, and provide the information list to the information list providing unit.

Further, an embodiment of the present invention provides an originator equipment. The originator equipment includes: an originator information adding unit, configured to add originator information to a message or a call originated to a recipient; and an originator sending unit, configured to originate the message or the call that carries the originator information generated by the originator information adding unit to the recipient through a server.

Further, an embodiment of the present invention provides a server. The server includes: an information adding unit, configured to add originator information to a message or a call originated to a recipient; and an information storing unit, configured to maintain a phone number and corresponding information of an originator, and send such information to the information adding unit when necessary.

Compared with the conventional art, embodiments of the present invention have the following merits:

By acquiring the content in the request or the call originated by the originator, the recipient can acquire the phone number and corresponding information of the originator. The recipient can display the brand logo to achieve simple and economic service promotion, or display the personalized label, nameplate, advertisement image, or emotion information to implement personalized services.

### Brief Description of the Drawings

FIG. 1 is a flowchart of a method for displaying originator information according to a first embodiment;

FIG. 2 is a flowchart of a method for displaying originator information according to a second embodiment;

FIG. 3 shows a process for a UE to actively acquire an information list from a specified server according to the second embodiment;

FIG. 4 shows a process for a server to set up a connection through a SIR request via a Push-OTA protocol to send an information list to a UE according to the second embodiment;

FIG. 5 shows a process for a server to send an information list to a UE via an HTTP POST protocol according to the second embodiment;

FIG. 6 is a flowchart of a method for displaying originator information according to a third embodiment;

FIG. 7 shows a process of sending originator information through a FACILITY message according to the third embodiment;

FIG. 8 is a flowchart of a method for displaying originator information according to a fourth embodiment;

FIG. 9 shows a process of sending originator information through a FACILITY message according to the fourth embodiment;

FIG. 10 shows another process of sending originator information through a FACILITY message according to the fourth embodiment;

FIG. 11 shows a structure of a system for displaying originator information according to a fifth embodiment;

FIG. 12 shows a structure of a system for displaying originator information according to a sixth embodiment; and

FIG. 13 shows a structure of a system for displaying originator information according to a seventh embodiment.

### Detailed Description of the Invention

The present invention is hereinafter described in detail with reference to accompanying drawings and exemplary embodiments.

Embodiments of the present invention are implemented through cooperation between the network devices and UEs in the existing mobile communication system. The objective is to enable the recipient to display not only the phone number of the originator but also the originator information such as the brand logo, name, image, personalized label, and emotional information after a message or a call arrives.

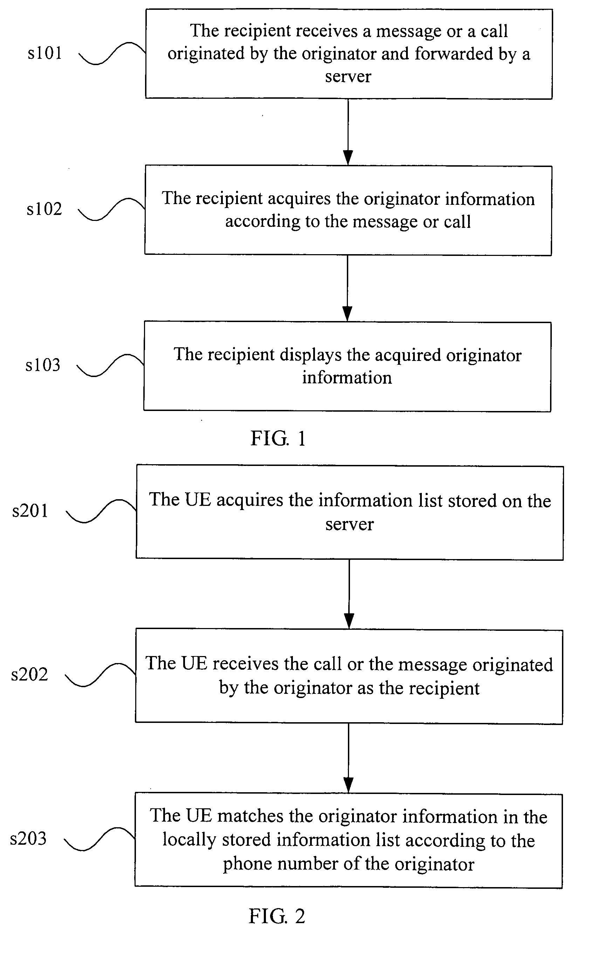

As shown in FIG. 1, a method for displaying originator information in the first embodiment of the present invention includes the following steps:

Step S101: A recipient receives a message or a call originated by an originator and forwarded by a server.

Step S102: The recipient acquires the originator information according to the message or the call.

Specifically, the recipient can acquire the originator information in the following modes:

Mode 1: The recipient acquires the originator information through the local information list.

The recipient can locally store and maintain a list of mappings between the phone numbers and information of the originators, where the list includes the phone numbers and information of all originators. When a call or a message arrives, the recipient automatically matches and displays the originator information. The recipient acquires the information list from the specified server, or the server actively pushes the information list to the recipient.

Mode 2: The originator adds the originator information to the message or the call.

When sending a message or originating a call, the originator adds the originator information and phone number to the message or the call. After receiving the message or the call, the recipient can acquire and display the originator information by parsing the message or the call.

Mode 3: The server adds the originator information to the message or the call originated by the originator.

The server stores the originator information in advance. When a message or a call from the originator arrives, the server may add the originator information to the message or the call. After receiving the message or the call, the recipient can acquire and display the originator information by parsing the message or the call.

Step S 103: The recipient displays the acquired originator information.

Specifically, the originator information may be in the form of text, image, audio, and video.

The methods for acquiring the originator information in step S102 are hereinafter described with reference to different embodiments.

FIG. 2 shows a method for displaying originator information when the UE stores the information list according to the second embodiment. The method includes the following steps:

Step S201: A UE acquires the information list stored on a server.

Specifically, this information list includes the phone number and information of the originator.

Step S202: The UE receives the call or the message originated by an originator as the recipient.

Step S203: The UE matches the originator information in the locally stored information list according to the phone number of the originator.

Specifically, the UE queries the phone number of the originator in the local information list and acquires the corresponding originator information according to the phone number if the phone number is found.

Step S204: The UE displays the originator information.

In the foregoing Step S201, the UE may acquire the user information list maintained by the server in the following modes:

Mode 1: The UE actively acquires the information list from the specified server.

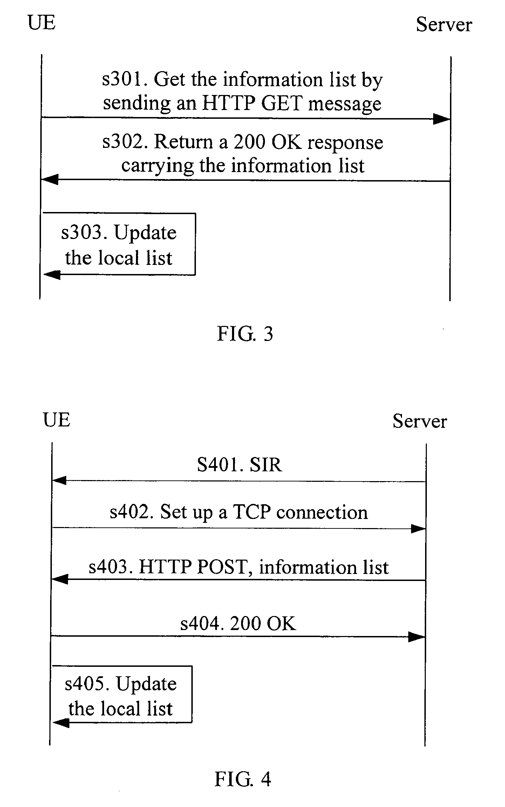

As shown in FIG. 3, the process includes the following steps:

Step S301: The UE sends a Hyper Text Transfer Protocol (HTTP) GET request for the information list to the server.

Step S302: After receiving the request, the server returns a 200 OK response carrying the information list to the UE, indicating that the requested resource is found and the request is accepted.

Step S303: The UE receives the new information list and updates the local information list to the new information list so as to prepare for receiving calls or messages.

Mode 2: The server actively sends the information list to the UE.

In terms of the sending modes, the following two methods can be used for mode 2.

The first method is that the server actively sends the information list to the UE by sending an HTTP SIR request, as shown in FIG. 4. The process includes the following steps:

Step S401: When the information list is changed, the server needs to update and maintain the list in time, notify the UE of the update, and request the UE to set up a connection for the server to push the updated information list. The server requests the UE to set up an end-to-end connection by sending a session initiation request (SIR) message to the UE. When HTTP is used, the SIR can be used to activate the setup of a Transmission Control Protocol (TCP) connection.

Step S402: The UE sets up a TCP connection with the server.

Step S403: The server pushes the information list to the UE by sending an HTTP POST message on the established TCP connection. The HTTP POST message is used to enable the specified originator to receive the content in the request and make the content a part of the originator.

Step S404: If the information list is received correctly, the UE returns a 200 OK response, indicating that the number list is received correctly.

Step S405: The UE updates the local information list to the new information list so as to prepare for receiving calls or messages.

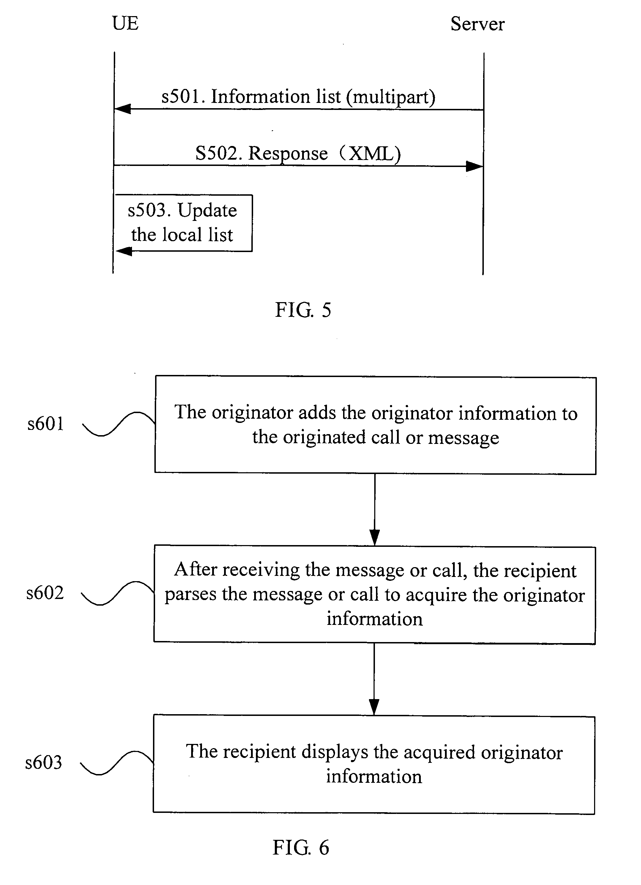

The second method is that the server actively sends the information list to the UE through the Push protocol, as shown in FIG. 5. The process includes the following steps:

Step S501: The server actively pushes the information list to the UE by using the Push submission process of the Push protocol.

Step S502: After receiving the information list, the UE returns a result notification to the server, notifying the server that the list is received.

Step S503: The UE updates the local information list to the new information list so as to prepare for receiving messages or calls.

The special SP information list acquired in the foregoing process is stored on the UE. When receiving a service call or a short message (SM), the UE can acquire the originator information from the locally stored information list according to the phone number and display the information to the user. When update is necessary, the server can automatically update the information list periodically through the OTA Update message.

FIG. 6 shows a method for displaying originator information when the originator adds information to the originated call without changing hard-ware electric circuit of the UE according to the third embodiment. The method includes the following steps:

Step S601: The originator adds the originator information to the originated call or the message.

Specifically, the originator may add its information to the SM, multimedia message (MM), or call by using an extended message or call command.

Step S602: After receiving the message or the call, the recipient parses the message or the call to acquire the originator information.

Step S603: The recipient displays the originator information.

In step S601, the method for the originator to add the originator information by using the extended message or call command is hereinafter described.

(1) Adding information to the SM

When sending an SM, the originator adds the originator information and phone number to the message header and/or message body. The UE can display the originator and/or phone number after receiving the message.

For example, the information can be carried by extending the header field of the SM.

Specifically, the header field can be extended as follows:
Originator identifier:

This header field of the SM is extended and used to carry information about the special service originator. The value of this header field can be a character string or an image.

The following are examples:

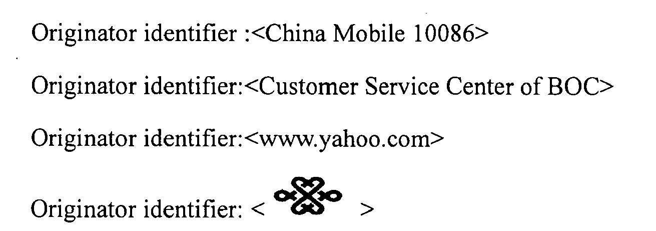

The permitted values in the preceding header fields include the SP name, phone number, source or brand logo, and advertisement image.

The following shows an example of adding the originator information to the header field of an SM in the extensible markup language (XML) format:

```
<SMAP: SubmitRequest
xmlns: SMAP="http://www.smsforum.net/schemas/smap/v 1.0"
xsiachemaLocation="http://www.smsforum.net/schemas/smap/v 1.0
http://www.smsforum.net/schemas/smap/v1.0/smap.xsd">
<SMAP: ShortMessage>
<SMAP:Header>
<SMAP:Destination>
<SMAP:Number>5555309</SMAP:Number>
</SMAP:Destination>
<SMAP: Originator identifier>
<SMAP:Name>China Mobile 10086</SMAP:Name> //Carry the text information and phone number.
</SMAP: Originator identifier>
</SMAP:Header>
<SMAP:Body>
<SMAP:Text>Jenny, I've got your number.</SMAP:Text>
</SMAP:Body>

/SMAP: ShortMessage>
</SMAP: SubmitRequest>
```

In the foregoing example, the <SMAP:Name>China Mobile 10086</SMAP:Name> header field carries the text information and phone number of the originator.

The information can also be carried by extending the body of an SM.

The following is an example of adding information to the SM in the XML format:

```
<SMAP:SubmitRequest
xmlns:SMAP="http://www.smsforum.net/schemas/smap/v1.0"
xsi:schemaLocation="http://www.smsforum.net/schemas/smap/v1.0
http://www.smsforum.net/schemas/smap/v1.0/smap.xsd">
<SMAP: ShortMessage>
<SMAP:Header>
<SMAP:Destination>
<SMAP:Number>5555309</SMAP:Number>
</SMAP:Destination>
</SMAP:Header>
<SMAP:Body>
<SMAP:Text>Jenny, I've got your number.</SMAP:Text>
<SMAP:Show_text>China Mobile</SMAP:Show_text>
<SMAP:Show_number>10086</SMAP:Show_number> //Carry the text information and phone number.
</SMAP:Body>
</SMAP: ShortMessage>
</SMAP:SubmitRequest>
```

In the foregoing example, the message body carries the text information and phone number of the originator:

```
<SMAP:Show_text>China Mobile</SMAP:Show_text>
<SMAP:Show_number>10086</SMAP:Show_number>
```

(2) Adding information to the MM

When an MM is originated, the originator can add its information to the body or header field of the MM. The information can be in the form of text, image, audio, or video, and be marked. After receiving the MM, the UE may parse the MM to acquire the originator information and display it to the user. Therefore, a user can know the originator of the MM and decide to view the MM or directly delete the MM without having to open or retrieve the MM.

The following is an example of adding the desired information to the body of an MM by the originator:

```
    X-Mms-Message-Type: m-send-req
    X-Mms-Transaction-Id: text-string
    X-Mms-Version: 1.0
    Message-Id: ext-string
    Date: 2007-09-25 17:34:02
    From: 95000
    To:13800000001
    Cc:
    Bcc:
    Subject: This is an example
    X-Mms-Message-Class: Personal
    X-Mms-Priority: Low
    X-Mms-Delivery-Report: Yes
     X-Mms-Read-Reply: Yes
     Content-Type: application/vnd.wap.multipart.mixed,boundary=ID_1234567
     --ID_1234567
     Content-Type: application/smil
     <smil>
     <head>
     <layout>
     <root-layout height="200" width="176" />
     <region id="Image" height=" 144" width=" 176" />
     <region id="Text" height="56" width=" 176" fit="scroll" />
     </layout>
     </head>
     <body>
     <par dur="20000ms">
     <video src="videoclipname.3gp" region="Image" />
     <text src="Text1.txt" region="Text" />
     </par>
    <par dur="2000ms">
    <img src="image.gif" region="Image" />
    <text src="cid:Text2" region="Text" />
    </par>
    </body>
    </smil>
         --ID_1234567
    Content-Type:application/vnd.oma.drm.message;boundary=PUTJTBYRBYTYBV
    Content-Location:drmimage.dm
    --PUTJTBYRBYTYBV
     Content-Type:image/jpeg
     Content-Transfer-Encoding:binary
     XXXXXXXXXXXXXXXXXXXXXXXXXXXXXXXX
     --PUTJTBYRBYTYBV--
     --ID_1234567-
     Content-Type:Text/LOGO Carry the text information "China
 Mobile".
     Content-Transfer-Encoding:binary
         XXXXXXXXXXXXXXXXXXXXXXXXXXXXXXXX
     --ID_1234567-
     Content-Type:image/jpeg/LOGO Carry the image and logo of China Mobile.
     Content-Transfer-Encoding:binary
    XXXXXXXXXXXXXXXXXXXXXXXXXXXXXXXX
    --ID_1234567-
    Content-Type:Audio/mpeg/LOGO Carry the audio file and logo of China
 Mobile.
    Content-Transfer-Encoding:binary
    XXXXXXXXXXXXXXXXXXXXXXXXXXXXXXXX
    --ID_1234567-
    Content-Type:Video/mp4/LOGO Carry the video file and logo of China
 Mobile.
    Content-Transfer-Encoding:binary
    XXXXXXXXXXXXXXXXXXXXXXXXXXXXXXXX
    --ID_1234567-
```

The originator may add the desired information to the header field of an MM. Specifically, the originator extends the header field of the MM, and adds the desired information in the XML format to the extended header field. The following is an example of adding the desired information to the header field of an MM:

```
     X-Mms-Message-Type: m-send-req
     X-Mms-Transaction-Id: text-string
     X-Mms-Version: 1.0
     Message-Id: ext-string
     Date: 2007-09-25 17:34:02
     From: 95000
     To:13800000001
     Cc:
     Bcc:
     Subject: This is an example
     X-Mms-Message-SN:application/+xml //Display the originator name as the added
 XML file.
     X-Mms-Message-Class: Personal
     X-Mms-Priority: Low
     X-Mms-Delivery-Report: Yes
     X-Mms-Read-Reply: Yes
     Content-type: multipart.mixed
     X-NowMMS-Content-Location:
     In this example, the format of the XML file used can be as follows:
     <?xml version="1.0" encoding="UTF-8"?>
     <!--W3C Schema generated by XMLSPY v5 rel. 4 U (http://www.xmlspy.com)-->
     <xs: schema xmlns:xs="http://www.w3.org/2001/XMLSchema"
 elementFormDefault="qualified">
     <xs:element name="show">
     <xs:complexType>
     <xs:attribute name="LOGO_text" type="xs:string" use="optional"/>
     <xs:attribute name="LOGO_image" type="xs:anyURI" use="optional"/>
     <xs:attribute name="LOGO_audio" type="xs:anyURI" use="optional"/>
     <xs:attribute name="LOGO_video" type="xs:anyURI" use="optional"/>
     </xs:complexType>
     </xs:element>
     <xs:element name="show_user" type="xs:string"/>
   </xs:schema>
```

(3) Adding information to the call

Specifically, the originator may add the desired information to the FACILITY message during a call. The information can be in the form of text, image, audio, or video, and is marked. After receiving the call, the recipient can parse the call to acquire the information and display it to the user. This method is applicable to the SMS and MMS.

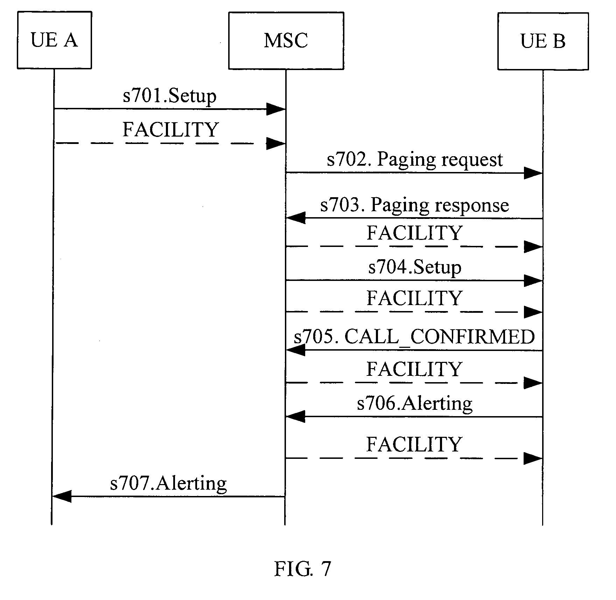

FIG. 7 shows an example of adding the originator information to the FACILITY message. The process includes the following steps:

Step S701: When initiating a Setup message, the originator adds the originator information to the FACILITY message and sends the FACILITY message to the MSC server.

Step S702: The MSC server initiates a paging request to UE B.

Step S703: UE B returns a paging response to the MSC server.

Step S704: The MSC server sends a Setup message to UE B.

Step S705: UE B returns a CALL CONFIRMED message to the MSC server.

Step S706: After UE B rings, UE B returns an Alerting message to the MSC server.

In this case, the MSC server may send a FACILITY message to UE B. In this message, the Facility field is extended to deliver the user information of UE A to be displayed to UE B. If FACILITY (Facility (Invoke = activatePSS(PSS-Type=Logo_Show(Huawei)))) is used, for example, UE B can parse the received FACILITY message to acquire LOGO_Show(Huawei) and provide "Huawei" for the upper-layer application to display.

Step S707: The MSC server returns an Alerting message to UE A.

The process for the server to add the originator information is provided in the fourth embodiment. In this case, the server stores the mapping between the originator information and the phone number. When necessary, the originator can subscriber to the information adding service from the server. The server can add the information for the originator when receiving a message or a call originated by the originator. In a specific case, a phone number can correspond to multiple pieces of information. That is, different types of information can be sent to different recipients. For example, if a user needs to originate a call or a message to a customer, the information "sincerely yours" can be displayed. When the user needs to originate a call or a message to his family, the information "yours love" can be displayed. The recipient can directly view the desired information set by the special service originator after receiving the message or the call.

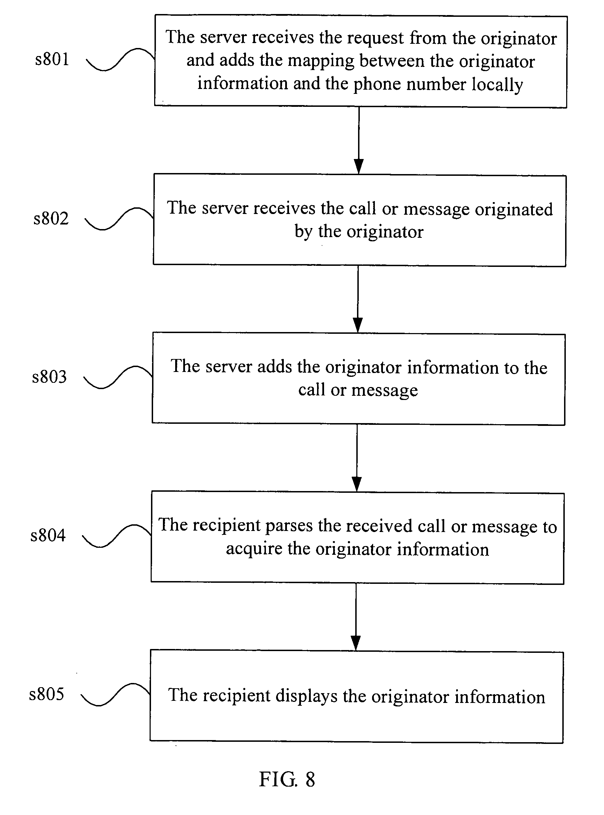

FIG. 8 shows a method for displaying originator information in the fourth embodiment. The method includes the following steps:

Step S801: The server receives the request from the originator and adds the mapping between the originator information and the phone number locally.

Specifically, the server may store the mapping between the originator information and the phone number according to the service subscription request sent by the originator.

Step S802: The server receives the call or the message originated by the originator.

Step S803: The server adds the originator information to the call or the message.

Step S804: After receiving the message or the call, the recipient parses the message or the call to acquire the originator information.

Step S805: The recipient displays the originator information.

In step S802, if the originator sends an SM, the server forwards the SM when the SM reaches the server. In this case, if the originator subscribes to the information adding service, the server can add the originator information to the SM.

The following is an example of adding the originator information to an SM by the server. The originator information can be added to the originating address header field of the SM.
Date Sent 03/04/17 08:59:16 TimeZone GMT+1.00H
Sender + 10086
Service Centre +10086
IEI: 00
LENGTH: 00
MESSAGE REF: 00
STATUS: 03
SC Address length: 07
SC Address type: 91
Type of number: International
Numbering plan identifier: E.164
SC Address: 447900000000
Message Type Indicator: 04
Message Type: SMS-DELIVER / SMS-DELIVER REPORT
More Messages To Send: No
Status Report Indication: No
Reply Path: No
Originating Address Length: 0C
Originating Address type: 91
Type of number: International
Numbering plan identifier: E.164
Originating Address: China Mobile<10086>/+xml //Add the logo to the originating address.
Protocol Identifier: Default
Data Coding Scheme: GSM Default Alphabet
SC Timestamp: 30407180956140
decoded: 03/04/17 08:59:16
Time Zone: GMT+1.00H
User Data Length: 40
decimal: 64
Message: OK, we'll meet, but be careful, you never know who's watching!!!

In step S802, if the originator sends an MM, the server forwards the MM when the MM reaches the server. In this case, if the originator subscribes to the information adding service, the server can add the originator information to the MM.

When receiving an MM from the originator, the server finds the corresponding information to be added in the local list according to the phone number of the originator in the header field, and adds the information to the header field. The header field may be an existing header field or an extended header filed. The information may be in the text or XML format. The following is an example of adding the originator information to the existing From header field of an MM by the server:

```
    X-Mms-Message-Type: m-send-req
    X-Mms-Transaction-Id: text-string
    X-Mms-Version: 1.0
    Message-Id: ext-string
    Date: 2007-09-25 17:34:02
     From: 95000 <China Mobile>/+xml
     To:13800000001
     Cc:
     Bcc:
     Subject: This is an example
     X-Mms-Message-Class: Personal
     X-Mms-Priority: Low
     X-Mms-Delivery-Report: Yes
     X-Mms-Read-Reply: Yes
     .....
```

In step S802, if the originator originates a call, the server can add the originator information by extending the message field, adding text descriptions next to the phone number, or adding information to the header field of the INVITE message. After receiving the call, the recipient can parse the call to acquire the originator information and display it to the user.

1. Adding the originator information to the call message

During the setup of a call from the network to the UE, the User-User information element is used to transmit the information between users and helps to transfer the user information. At present, the User-User information element can consist of up to 131 bytes. After receiving a call setup request from the originator, the server adds or deletes the calling number. In this example, the server adds the desired information for the special SP. The following figure shows the structure of the User-User information element:

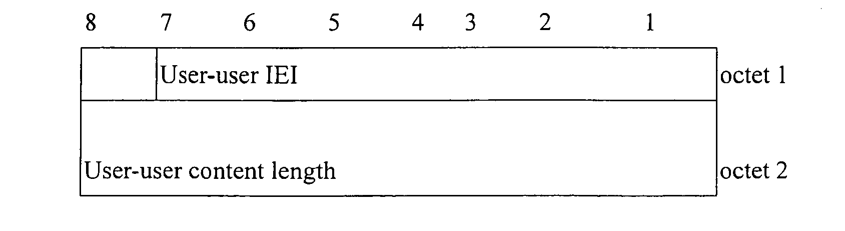

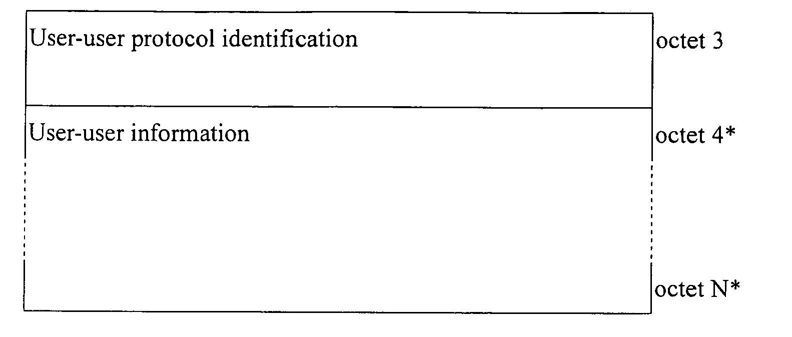

The desired information can be added to the idle bytes.

2. Adding the originator information to the INVITE message

When the originator originates a call, the server can add text information or an image in the XML format (for example, a brand logo) next to the phone number specified by the P--Asserted-Identity header field in the received INVITE message.

The following is an example of adding the information and/or XML file next to the phone number in the INVITE message by the server:

```
INVITE sip:+14085551212@proxy.pstn.net SIP/2.0
Via: SIP/2.0/TCP useragent.example.com;branch=z9hG4bK-124
Via: SIP/2.0/TCP proxy.example.com;branch=z9hG4bK-abc
To: <sip:+14085551212@example.com>
From: "Chinamobile" <sip:customerservice@chinamobile.invalid>;tag=9802748
Call-ID: 245780247857024504
CSeq: 2 INVITE
Max-Forwards: 69
P-Asserted-Identity: "Chinamobile" <sip:customerservice@chinamobile.com>
P-Asserted-Identity: tel: China Mobile<+14085264000>/+xml Add the originator
name and/or brand logo in the XML format.
Privacy: id
```

3. Adding the originator information to the header field of the INVITE message

When the originator originates a call, the server can add text information or an image (for example, brand logo) in the XML format by extending the header field of the received INVITE message.

The following is an example of adding the information and/or XML file by extending the header field of the INVITE message by the server:

```
INVITE sip:+14085551212@proxy.pstn.net SIP/2.0
Via: SIP/2.0/TCP useragent.example.com;branch=z9hG4bK-124
Via: SIP/2.0/TCP proxy.example.com;branch=z9hG4bK-abc
To: <sip:+14085551212@example.com>
From: "Chinamobile" <sip:customerservice@chinamobile.invalid>;tag=9802748
Caller Identify:<China Mobile>/+xml Add the information by extending the header field.
Call-ID: 245780247857024504
CSeq: 2 INVITE
Max-Forwards: 69
P-Asserted-Identity: "Chinamobile" <sip:customerservice@chinamobile.com>
P-Asserted-Identity: tel:+14085264000
Privacy: id
```

4. Adding the originator information to the header field of the FACILITY message

When the originator originates a call, the server finds that the originator has subscribed to the CID service, and the core network sends the CID information of the originator to the terminating UE through a FACILITY message. The FACILITY message is sent between the UE and the network and used for supplementary service operations. The Facility information element in the FACILITY message is defined in 3GPP 24.080.

The CID service may be activated for the originating UE A before a call is set up. Assume that the CID service information of UE A and the information to be displayed are stored on the HLR or a specialized AS.

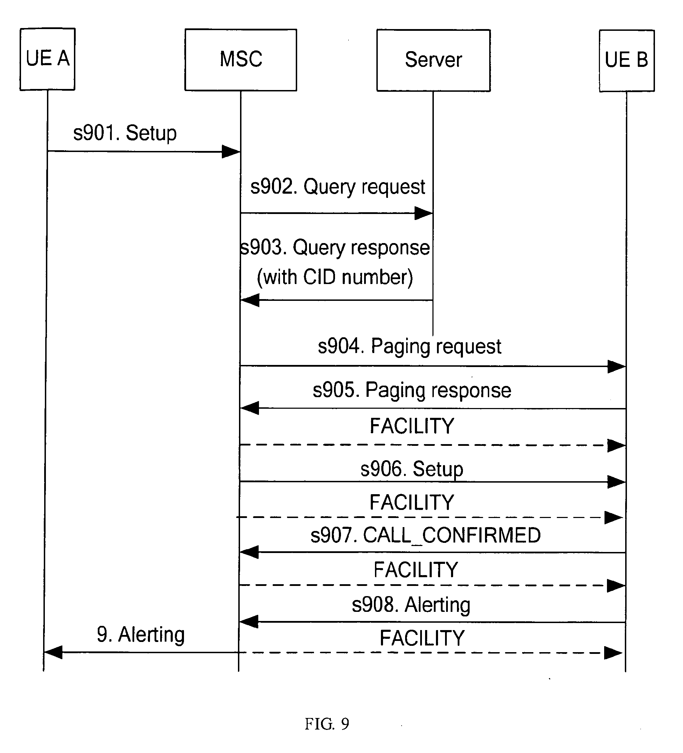

FIG. 9 shows the process of sending the originator information through a FACILITY message. The process includes:

Step S901: The originating UE A sends a Setup message to the MSC server.

Step S902: The MSC server sends a query request to the AS. The query request, which may be a customized message, includes the originating UE information, and may include all kinds of information to be queried (necessary when the AS provides more than one query service), for example:

```
QUERY
UserID:UE A IMSI
/Logo_Show
```

The foregoing example is used to query the IMSI of UE A and the related user information to be displayed (LOGO_Show), for example, whether the service is subscribed to and what information is to be carried.

Step S903: The server returns a response to the MSC server. The server can be the HLR (the SIR_ACK message is reused as the query request in this case) or a specialized server. The query response, which may be a customized message, includes the information about whether UE A has subscribed to the CID service and what information is to be carried, for example:

```
Result
UserID:UE A IMSI
/Logo_Show=Ture
Logo_Show Content="Huawei"
```

Step S904: The MSC server initiates a paging request to UE B.

Step S905: UE B returns a paging response to the MSC server.

Step S906: The MSC server sends a Setup message to UE B.

Step S907: UE B returns a CALL CONFIRMED message to the MSC server.

Step S908: After UE B rings, UE B returns an Alerting message to the MSC server.

In this case, the MSC server may send a FACILITY message to UE B. In this message, the Facility field is extended to deliver the user information of UE A to be displayed to UE B. If FACILITY(Facility (Invoke = activatePSS(PSS-Type=Logo_Show(Huawei)))) is used, for example, UE B can parse the received FACILITY message to acquire LOGO_Show(Huawei) and provide "Huawei" for the upper-layer application to display.

Step S909: The MSC server returns an Alerting message to UE A.

In the foregoing example, the information "Huawei" is only an example. In practice, the information to be displayed on UE A can be any content. The MSC server can send the FACILITY message in any step marked by a dotted line, instead of step S908.

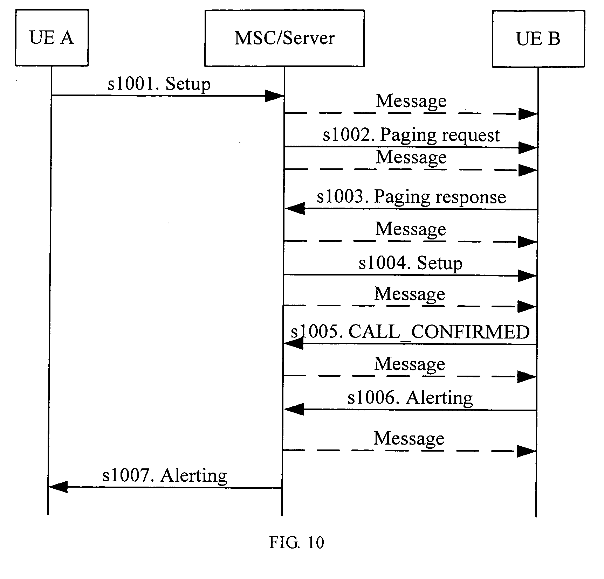

In this embodiment, an AS (or the HLR) should record information about whether the user has subscribed to the CID service, and store the information to be displayed. The AS can receive and parse the query request and return query responses in the specified format. In addition, the UE should be able to receive and parse the FACILITY message and provide the content carried in the message to the upper-layer application, so that the upper-layer application displays the caller information according to the content. In addition to the Facility information element, an unstructured supplementary service data (USSD) message, an SM, an MM, or a Flash SM can also be used to carry the data to be displayed on the UE. FIG. 10 shows an example. The process includes the following steps:

Step S1001: When initiating a Setup message, the originator adds the information to the FACILITY message and sends the FACILITY message to the MSC server.

Step S1002: The MSC server sends a paging request to UE B.

Step S1003: UE B returns a paging response to the MSC server.

Step S1004: The MSC server sends a Setup message to UE B.

Step S1005: UE B returns a CALL CONFIRMED message to the MSC server.

Step S1006: After UE B rings, UE B returns an Alerting message to the MSC server.

In this case, the MSC server may send a FACILITY message to UE B. In this message, the Facility field is extended to deliver the user information of UE A to be displayed to UE B. If FACILITY(Facility (Invoke = activatePSS(PSS-Type=Logo_Show(Huawei)))) is used, for example, UE B can parse the received FACILITY message to acquire LOGO_Show(Huawei) and provide "Huawei" for the upper-layer application to display.

Step S 1007: The MSC server returns an Alerting message to UE A.

The originating address of the message (which can be a USSD message, an SM, or an MM) that carries the information in the network is set to the address of the originating UE A. In this way, after receiving the message, UE B can bind the message to the current call according to the originating address and use the content of the message for the CID service.

According to the foregoing method provided in the embodiments of the present invention, the recipient may acquire the phone number and information of the originator by acquiring the content from the request or the call originated by the originator. In this case, the brand logo may be displayed, thus implementing simple and economic service promotion. If the user sends a request for the information list to the server, stores and maintains the information list, and matches the corresponding information in the local information list according to the phone number, the server may push the information. If the server adds the information, and the SP subscribes to the function in advance, the server may add the information to the messages or calls originated by this SP. The SP may also add the information.

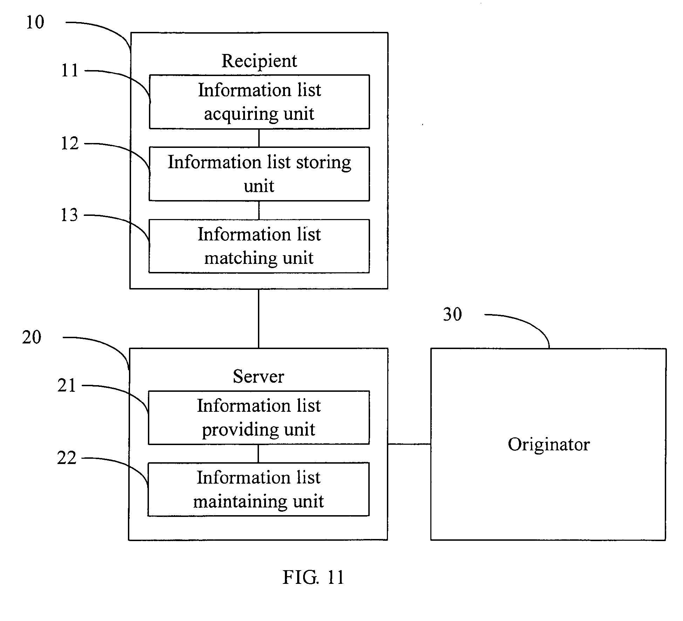

The fifth embodiment of the present invention provides a system for displaying originator information. As shown in FIG. 11, the system includes a recipient 10, a server 20, and an originator 30.

The recipient 10 is configured to acquire an information list (including the phone number and corresponding user information of the originator) from the server 20, and acquire and display the information of the originator 30 in the information list after receiving a call or a message originated by the originator 30.

The server 20 is configured to: store the phone number and corresponding user information, provide the information to the recipient 10, and send the call or the message originated by the originator to the recipient 10.

The originator 30 is configured to originate the call or the message to the recipient 10 through the server 20.

The recipient 10 may further include: an information list acquiring unit 11, configured to acquire the information list (including the phone number and corresponding user information) from the server 20 actively or according to the notification message from the server 20; an information list storing unit 12, configured to store the information list acquired by the information list acquiring unit 11; and an information list matching unit 13, configured to match the originator number of the received message or call according to the information list stored by the information list storing unit 12 and acquire originator information.

The server 20 may further include: an information list providing unit 21, configured to provide the information list to the receive 10 by actively sending a notification to the recipient 10 or after receiving a request from the recipient 10; and an information list maintaining unit 22, configured to maintain the information list (including the phone number and corresponding user information) and provide it to the information list providing unit 21.

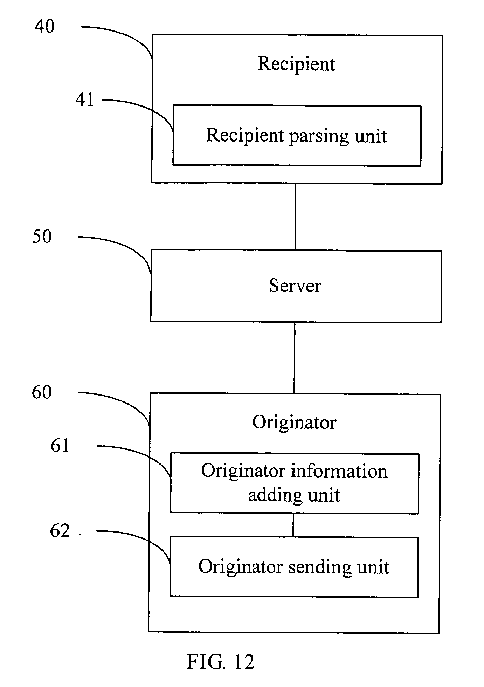

The sixth embodiment of the present invention provides a system for displaying originator information. As shown in FIG. 12, the system includes a recipient 40, a server 50, and an originator 60.

The recipient 40 is configured to receive a message or a call originated by the originator 60 and forwarded by the server 50, acquire and display the originator 60 information added by the originator 60 from the message or the call.

The server 50 is configured to forward the message or the call originated by the originator 60 to the recipient 40.

The originator 60 is configured to add the originator information to the message or the call by using the extended message or call command when originating the message or the call to the recipient 40.

The recipient 40 may further include: a recipient parsing unit 41, configured to parse the message or the call originated by the originator 60 and forwarded by the server 50, and acquire the originator 60 information added by the originator 60 from the message or the call.

The originator 60 may further include: an originator information adding unit 61, configured to add the originator information to the message or the call originated to the recipient 40, that is, adding the originator information to the header field or body of the SM or MM to be sent or to the FACILITY message of the originated call; and an originator sending unit 62, configured to send the message or the call originated by the originator information adding unit 61 to the server 50.

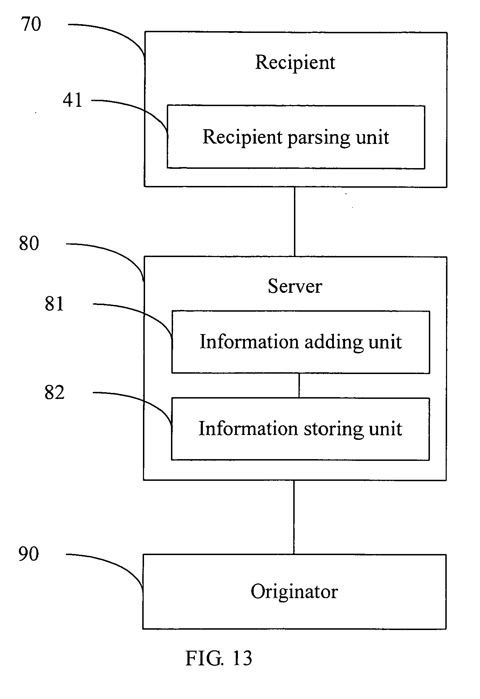

The seventh embodiment of the present invention provides a system for displaying originator information. As shown in FIG. 13, the system includes a recipient 70, a server 80, and an originator 90.

The recipient 70 is configured to receive a message or a call originated by the originator 90 and forwarded by the server 80, acquire and display the originator 60 information added by the server 80 from the message or the call.

The server 80 is configured to forward the message or the call originated by the originator 60 to the recipient 40, and add the originator 90 information to the message or the call.

The originator 90 is configured to originate the message or the call to the recipient 70.

The recipient 70 may further include: a recipient parsing unit 71, configured to: parse the message or the call originated by the originator 90 and forwarded by the server 80, and acquire the originator 60 information added by the server 80 from the message or the call.

The server 80 may further include: an information adding unit 81, configured to add the originator 90 information to the message or the call originated by the originator 90, that is, adding the originator 90 information to the header field or body of the SM or MM, or to the User-to-User information element, INVITE message, or FACILITY message in the call; and an information storing unit 82, configured to store the phone number and corresponding information of the originator 90 after receiving the service subscription message from the originator 90, and provide the information to the information adding unit 81 when necessary.

According to the foregoing equipment provided in the embodiments of the present invention, the recipient can acquire the phone number and information of the originator by acquiring the content from the request or the call originated by the originator. In this case, the brand logo can be displayed, thus implementing simple and economic service promotion. If the user sends a request for the information list to the server, stores and maintains the information list, and matches the corresponding number locally according to the information list, the server can push the information. If the server adds the information, and the SP subscribes to this function in advance, the server can add the information to the message or the call originated by this SP. The SP can also add the information.

Through the descriptions of the foregoing embodiments, it is understandable to those skilled in the art that the embodiments of the present invention may be implemented through software and a necessary general hardware platform or through hardware only. In most cases, however, software and a general hardware platform are preferred. Based on such understanding, the technical solution of the present invention or contributions to the conventional art can be embodied by a software product. The software product is stored in a storage medium and incorporates several instructions to instruct a computer device, for example, a personal computer, a server, or a network device, to execute the method provided by each embodiment of the present invention.

Although the present invention has been described through several exemplary embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the following claims or their equivalents.

## Claims

1. A method for displaying originator information, comprising:
receiving a message or a call originated by an originator and forwarded by a server;
acquiring originator information according to the message or the call; and
displaying the acquired originator information.

2. The method of claim 1, wherein before receiving the message or the call originated by the originator and forwarded by the server, the method comprises:
acquiring an information list comprising a mapping between a phone number and information of the originator from the server;
the process of acquiring the originator information according to the message or the call comprises:
acquiring the phone number of the originator according to the message or the call; and
acquiring the originator information according to the phone number of the originator and the information list.

3. The method of claim 2, wherein the process of acquiring the information list stored on the server comprises:
actively acquiring the information list from the server; or
acquiring the information list from the server after receiving a notification message sent by the server.

4. The method of claim 1, wherein the process of acquiring the originator information according to the message or the call comprises:
parsing the message or the call to acquire the originator information from the message or the call.

5. The method of claim 4, further comprising:
when the message is a short message (SM), parsing a header field or body of the SM to acquire the originator information added by the originator or the server;
when the message is a multimedia message (MM), parsing a header field or body of the MM to acquire the originator information added by the originator or the server; or
parsing a User-to-User information element, an INVITE message, an unstructured supplementary service data (USSD) message, or a FACILITY message of the call to acquire the originator information added by the originator or the server.

6. The method of any one of claims 1-5, wherein the originator information can be in the form of text, image, audio, emotion information, and video, or any combination thereof.

7. A method for sending originator information, comprising:
adding originator information to a message or a call originated to a recipient; and
sending the message or originating the call to the recipient through a server.

8. The method of claim 7, wherein the process of adding the originator information to the message or the call originated to the recipient comprises:
when the message is a short message (SM), adding the originator information to a header field or body of the SM; or
when the message is a multimedia message (MM), adding the originator information to a header field or body of the MM; or
adding the originator information to a FACILITY message of the call.

9. The method of claim 8, wherein the information added to the header field of the MM may be in a text or XML format.

10. A method for sending originator information, comprising:
receiving a call or a message originated by an originator to a recipient;
adding originator information to the call or the message; and
sending the call or the message that carries the originator information to the recipient.

11. The method of claim 10, wherein before receiving the message or the call originated by the originator to the recipient, the method further comprises:
receiving an originator information service subscription added by the originator in the message or the call.

12. The method of claim 10, wherein the process of adding the originator information to the message or the call comprises:
when the message is a short message (SM), adding the originator information to a header field or body of the SM; or
when the message is a multimedia message (MM), adding the originator information to a header field or body of the MM; or
adding the originator information to a User-to-User information element, an INVITE message, an unstructured supplementary service data (USSD) message, or a FACILITY message of the call.

13. A recipient equipment, comprising:
an information list acquiring unit, configured to acquire an information list comprising a user number and corresponding user information from a server;
an information list storing unit, configured to store the information list acquired by the information list acquiring unit; and
an information list matching unit, configured to acquire originator information from the information list stored by the information list storing unit according to the phone number of the originator in a received message or a call.

14. A server, comprising:
an information list providing unit, configured to provide an information list to a recipient; and
an information list maintaining unit, configured to maintain the information list that comprises a phone number and corresponding user information, and provide it to the information list providing unit.

15. An originator equipment, comprising:
an originator information adding unit, configured to add originator information to a message or a call originated to a recipient; and
an originator sending unit, configured to originate the message or the call that carries the originator information generated by the originator information adding unit to the recipient through a server.

16. A server, comprising:
an information adding unit, configured to add originator information to a message or a call originated to a recipient; and
an information storing unit, configured to maintain an originator number and corresponding information and provide such information to the information adding unit when necessary.
